# EUROPÄISCHE PATENTSCHRIFT

(11) **EP 2 018 311 B1**
(45) Veröffentlichungstag und Bekanntmachung des Hinweises auf die Patenterteilung: **11.11.2009**
(21) Anmeldenummer: 07722432.7
(22) Anmeldetag: 15.05.2007
(51) Int. Cl.: B62D 25/06, B62D 29/00, B62D 29/04

(54) **FAHRZEUGBAUTEIL MIT EINER VERSTEIFUNG**
VEHICLE PART COMPRISING A REINFORCEMENT
COMPOSANT DE VEHICULE PRESENTANT UN RENFORCEMENT

(30) Priorität: 15.05.2006 DE 102006022927
(43) Veröffentlichungstag der Anmeldung: 28.01.2009
(73) Patentinhaber: Webasto AG, 82131 Stockdorf (DE)
(72) Erfinder: POLLAK, Martin, 82178 Puchheim (DE); SCHWAIGHOFER, Ralf, 83115 Neubeuern (DE); LANG, Andreas, 82194 Gröbenzell (DE)
(74) Vertreter: Wiese Konnerth Fischer Patentanwälte Partnerschaft
(86) Internationale Anmeldenummer: PCT/DE2007/000884
(87) Internationale Veröffentlichungsnummer: WO 2007/131492

(56) Entgegenhaltungen:
- EP-A2- 0 370 342
- EP-A2- 1 306 292
- DE-A1-102004 025 548
- US-A1- 2005 120 642

## Beschreibung

Die Erfindung betrifft ein Bauteil eines Fahrzeugs, insbesondere ein Fahrzeugdachteil, das zumindest teilweise aus Polycarbonat hergestellt ist und an dem eine rahmenartige Verstärkung angebracht Ein solches Bauteil ist aus der DE 10 2004 025 548 A1 bekannt.

Für das Anbringen einer derartigen Verstärkung sind unterschiedliche Lösungen vorgeschlagen worden. So ist aus der DE 10 2004 025 548 A1 ein Deckel eines öffnungsfähigen Fahrzeugdaches bekannt, der eine zumindest teilweise transparente Scheibe aus Kunststoff, insbesondere aus Polycarbonat, und einen mit der Scheibe verbundenen Verstärkungsrahmen enthält, der in eine rahmenartige Umschäumung der Scheibe eingebettet ist. Die Versteifung des Deckels erfolgt somit im wesentlichen durch den Verstärkungsrahmen, der jedoch die Umschäumung zu seiner Verbindung mit dem Deckel erfordert.

Die DE 10 2004 038 852 A1 offenbart eine Spritzgießmaschine, mit der ein großflächiges Kunststoffformteil, wie z. B. ein Deckel eines Schiebedaches, aus Polycarbonat mit einem Verstärkungsrahmen hergestellt werden kann.

Aus der EP 0 370 342 B1 ist ein Leichtbauteil aus einem schalenförmigen Grundkörper bekannt, der aus tiefgezogenem Metallblech oder aus durch Warmpressen verformtem Kunststoffblech hergestellt ist und dessen Innenraum Verstärkungsrippen aufweist, die aus an den Grundkörper angespritztem Kunststoff wie z. B. Polyamid bestehen und beispielsweise V-förmig im Innenraum des Grundkörpers angeordnet sind. Aus dem gleichen Kunststoff können auch Anschlußflansche und Verstärkungsaugen zum Verbinden des Leichtbauteils mit anderen Bauelementen angespritzt werden. Anwendungsfälle für derartige Leichtbauteile sind z. B. Strukturteile für Kraftfahrzeugtüren, Stoßfänger oder Front- und Heckschalen für PKW oder auch Tragrahmen für Büromaschinen.

Die EP 0 995 668 B1 offenbart ein Hohlkammer-Leichtbauteil mit einem schalenförmigen Gehäuseteil aus Metall und einer gerippten Stützstruktur aus insbesondere thermoplastischem Kunststoff wie z. B. Polycarbonat, die an der Innenseite des Gehäuseteils anliegt und mit diesem verbunden ist. Eine Deckplatte oder Deckschale aus Metall oder einem Kunststoffkomposit deckt den aus dem Gehäuseteil und der Stützstruktur gebildeten Raum ab und ist mit der Umrandung des Gehäuseteils und/oder mit der Stützstruktur durch Schweißen übereinanderliegender Flächen, insbesondere durch Reibschweißen, verbunden. Ein derartiges Leichtbauteil wird z. B. als Längs- oder Querträger oder als Querlenker verwendet. Eine Verbindung zweier aus diesen Leichtbauteilen hergestellter Träger erfolgt z. B. über Kunststoffniete.

Aufgabe der Erfindung ist es, ein eingangs genanntes Bauteil zu schaffen, das hinsichtlich der Art seiner rahmenartigen Verstärkung verbessert ist.

Diese Aufgabe wird bei dem oben genannten Bauteil erfindungsgemäß dadurch gelöst, dass die rahmenartige Verstärkung eine Hybridstruktur ist, die eine Aussteifungsstruktur aus Kunststoff enthält, welche zum Festlegen der Hybridstruktur an dem Bauteil durch Schweißen, insbesondere durch Vibrations- oder Reibschweißen, fest angebracht ist. Durch diese Gestaltung wird eine Verstärkung mit einem leichten Hybridbauteil bereitgestellt, das durch seine Knick- und Beulsteifigkeit eine hohe Festigkeit besitzt. Durch das Vibrations- oder Reibschweißen können die zu verschweißenden Bauteile weitgehend unabhängig vom Material miteinander verbunden werden und die Wärmeeinflusszone ist sehr gering. So wird bei optisch anspruchsvollen Bauteilen eine Verschlechterung der Bauteilqualität neben der Schweißzone weitgehend vermieden. Durch Verschweißen der Aussteifungsstruktur mit dem Bauteil ergibt sich eine Vielzahl von Schweißstellen, die eine dauerhafte Befestigung ohne ein zusätzliches Befestigungsmittel wie z. B. ein Klebstoff ermöglicht.

Vorteilhafte Ausgestaltungen der Erfindung sind in den Unteransprüchen angegeben.

Bevorzugt enthält die Aussteifungsstruktur Rippen oder Stege oder dergleichen, deren freie Randbereiche an dem Bauteil verschweißt werden.

Zweckmäßigerweise besteht die Aussteifungsstruktur bzw. die Rippen oder Stege aus Polycarbonat-ABS oder aus ABS hoher Festigkeit, wohingegen ein schalenartiges oder U-förmiges Profil, in dem die Aussteifungsstruktur bzw. die Rippen oder Stege aufgenommen sind, insbesondere aus Metallblech hergestellt sein kann.

Zweckmäßigerweise ist das Bauteil in einem 2K-Spritzgießverfahren mit einer insbesondere streifenförmigen Schicht hergestellt, an der die Hybridstruktur angebracht ist. Das 2K-Spritzgießverfahren ist an sich bekannt und muß daher nicht näher erläutert werden.

Wenn das Bauteil an der der Anbringungsstelle der Hybridstruktur gegenüberliegenden Seite eine Abdeckfolie aufweist, wird in jedem Fall eine optisch einwandfreie Anbringung der Hybridstruktur gewährleistet.

Bevorzugt ist das Bauteil ein Dachteil eines Fahrzeugs, insbesondere eines Hardtop-Daches eines Cabriolets. Es kann jedoch jedes andere insbesondere flächige Karosserieteil oder Dachteil eines Fahrzeugs mit fester Dachstruktur oder mit ablegbarem Dach sein.

Nachfolgend wird ein Ausführungsbeispiel des Bauteils unter Bezugnahme auf die Zeichnung näher erläutert. Es zeigt:
- Fig. 1: in einer Schnittansicht ein Ausführungsbeispiel eines erfindungsgemäßen Bauteils mit einem Hybridbauteil zur Verstärkung; und
- Fig. 2: in perspektivischer Draufsicht das zum Verstärken an das Bauteil angebrachte Hybridbauteil.

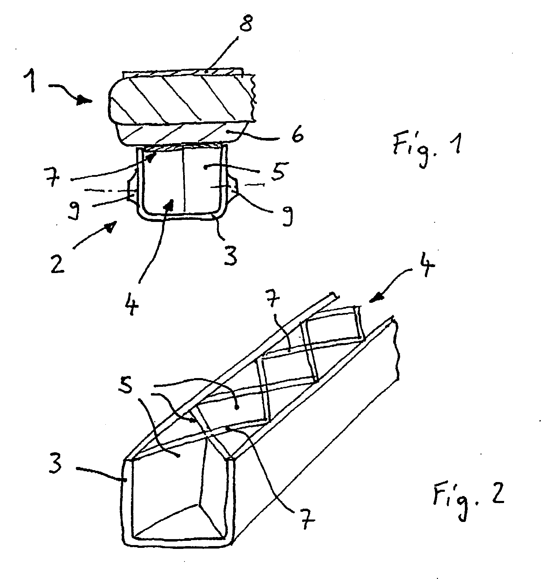

Ein Bauteil 1 eines Fahrzeugs, z. B. eine Scheibe eines Schiebedaches oder eine Dachschale eines Dachelements eines versenkbaren Klappdaches eines Cabriolets, ist aus Polycarbonat in einem Spritzgußverfahren in transparenter oder teiltransparenter Bauweise hergestellt. Das Bauteil 1 enthält eine rahmenartige Verstärkung oder Versteifung in Gestalt einer Hybridstruktur 2, die beispielsweise ein U-Profil 3 enthält, das durch eine Aussteifungsstruktur 4 in Form von Stegen, Rippen 5 oder dergleichen verstärkt ist. Die Aussteifungsstruktur 4 kann als Diagonalverrippung (siehe Fig. 2) oder als Längs-/Querverrippung gebildet sein. Das U-Profil 3 ist bevorzugt aus einem Metallblech hergestellt, während die Aussteifungsstruktur 4 bzw. die Rippen 5 aus einem Kunststoff wie insbesondere Polycarbonat, ABS oder Polycarbonat-ABS hergestellt sein kann bzw. können.

Eine derartige Hybridstruktur 2 (Fig. 2) wird auch als Erlanger Träger bezeichnet und ist z. B. in der EP 0 370 342 B1 beschrieben, auf die hinsichtlich der näheren Erläuterung der Hybridstruktur 2, soweit erforderlich, verwiesen wird.

Die Hybridstruktur 2 ist gemäß einer ersten Variante des Ausführungsbeispiels an einer streifenförmigen Schicht 6 befestigt, die an dem eine erste Komponente darstellenden Bauteil 1 z. B. randseitig und hinsichtlich seiner Einbauanordnung unterseitig angebracht ist. Die Schicht 6 besteht beispielsweise aus PC-ABS und ist als zweite Komponente in einem an sich bekannten 2K-Spritzgießverfahren an die erste Komponente angespritzt.

Die Befestigung der Hybridstruktur 2 an dem Bauteil 1 bzw. der Schicht 6 erfolgt durch Verschweißen, insbesondere durch Vibrations- oder Reibschweißen, der Aussteifungsstruktur 4 mit der Schicht 6. Dabei wird eine innige Verbindung am oberen Randbereich 7 der Aussteifungsstruktur 4 bzw. der Rippen 5 und Stege mit der Schicht 6 erzeugt.

Das Bauteil 1 erhält durch die Hybridstruktur 2 eine hohe Steifigkeit bei geringem Gewicht der im Leichtbau gefertigten Hybridstruktur 2.

An dem Bereich des Bauteils 1, insbesondere einem Randbereich, an dem die Schicht 6 und die Hybridstruktur 2 angebracht ist, wird durch die erfindungsgemäße Anbringung verhindert, daß optisch nachteilige Einfallstellen in dem PC-Material des Bauteils 1 entstehen, wie sie bei einstückiger Herstellung auftreten können. An der der Hybridstruktur 2 gegenüberliegenden Seite des Bauteils 1, die insbesondere eine Außen- oder Oberseite des Bauteils 1 entsprechend seiner Einbaulage ist, kann eine Abdeckfolie 8 angebracht sein, die diesen Verbindungsbereich abdeckt.

Bei einer weiteren Variante des Ausführungsbeispiels entfällt die Schicht 6 aus PC-ABS (nicht dargestellt). Dann wird die Hybridstruktur 2 unmittelbar an das Bauteil 1 bzw. die Unterseite des Bauteils 1 durch Schweißen angebracht. In diesem Fall ist es zweckmäßig, wenn auf dem Randstreifen des transparenten Bauteils 1 gegenüber der Hybridstruktur 2 die Abdeckfolie 8 aufgebracht wird, so daß die darunter liegende Verstärkungsstruktur von oben durch das transparente Polycarbonat nicht zu sehen ist.

Die Hybridstruktur 2 eignet sich insbesondere zum Anbringen oder Aufnehmen einer Lagerung für das Bauteil 1, die durch Lageraugen 9 am U-Profil 3 schematisch dargestellt ist. So kann das Bauteil 1 ein Dachschalenteil eines festen oder klapp- oder faltbaren Hardtopdaches eines Cabriolets sein und die das Dachschalenteil verstärkende Hybridstruktur 2 kann ein gerades oder gekrümmtes Rahmenteil sein, mit dem das Dachschalenteil an einer das Hardtop tragenden und verstellenden Lenkereinrichtung angebracht ist.

Die Hybridstruktur 2 wird somit unmittelbar an dem Bauteil 1 ohne Zwischenschaltung eines Zusatzbauteils, einer Umschäumung oder einer Verklebung befestigt.

Das U-förmige Profil 3 und damit die Hybridstruktur 2 können als lineares Element wie auch als gebogenes Element gestaltet sein, wobei die Biegung sowohl in horizontaler wie auch in vertikaler Ebene ausgeführt sein kann.

### Bezugszeichenliste

- 1: Bauteil
- 2: Hybridstruktur
- 3: U-Profil
- 4: Aussteifungsstruktur
- 5: Rippe
- 6: Schicht
- 7: Randbereich
- 8: Abdeckfolie
- 9: Lagerauge

## Patentansprüche

1. Bauteil eines Fahrzeugs, insbesondere Fahrzeugdachteil, das zumindest teilweise aus Polycarbonat hergestellt ist und an dem eine rahmenartige Verstärkung angebracht ist,
**dadurch gekennzeichnet,**
**dass** die rahmenartige Verstärkung eine Hybridstruktur (2) ist, die eine Aussteifungsstruktur (4) aus Kunststoff enthält, welche zum Festlegen der Hybridstruktur (2) an dem Bauteil (1) durch Schweißen, insbesondere durch Vibrations- oder Reibschweißen, fest angebracht ist.

2. Bauteil nach Anspruch 1,
**dadurch gekennzeichnet, dass** die Aussteifungsstruktur (4) Rippen (5) enthält, deren freie Randbereiche (7) an dem Bauteil (2) verschweißt sind.

3. Bauteil nach Anspruch 1 oder 2,
**dadurch gekennzeichnet, dass** die Aussteifungsstruktur (4) bzw. die Rippen (5) aus Polycarbonat-ABS oder aus ABS bestehen.

4. Bauteil nach einem der Ansprüche 1 bis 3,
**dadurch gekennzeichnet, dass** das Bauteil (1) in einem 2K-Spritzgießverfahren mit einer insbesondere streifenförmigen Schicht (6) hergestellt ist, an der die Hybridstruktur (2) angebracht ist.

5. Bauteil nach einem der Ansprüche 1 bis 4,
**dadurch gekennzeichnet, dass** das Bauteil (1) an der der Anbringungsstelle der Hybridstruktur (2) gegenüberliegenden Seite eine Abdeckfolie (8) aufweist.

6. Bauteil nach einem der Ansprüche 1 bis 5,
**dadurch gekennzeichnet, dass** das Bauteil (1) ein Dachteil eines Fahrzeugs, insbesondere eines Hardtop-Daches eines Cabriolets, oder einer Komponente des Dachteils ist.

## Claims

1. Structural part of a vehicle, in particular part of a vehicle roof, which is at least partially produced from polycarbonate and to which a frame-like reinforcement is attached, **characterized in that** the frame-like reinforcement is a hybrid structure (2) which includes a stiffening structure (4) of plastic that is firmly attached to the structural part (1), by welding, in particular by vibration or friction welding, in order to fix the hybrid structure (2).

2. Structural part according to Claim 1, **characterized in that** the stiffening structure (4) includes ribs (5), the free edge regions (7) of which are welded to the structural part (2).

3. Structural part according to Claim 1 or 2,
**characterized in that** the stiffening structure (4) or the ribs (5) consist(s) of polycarbonate/ABS or of ABS.

4. Structural part according to one of Claims 1 to 3, **characterized in that** the structural part (1) is produced in a two-component injection-moulding process with a layer (6) that is in particular in the form of a strip, to which the hybrid structure (2) is attached.

5. Structural part according to one of Claims 1 to 4, **characterized in that** the structural part (1) has a backing film (8) on the side opposite from the point of attachment of the hybrid structure (2).

6. Structural part according to one of Claims 1 to 5, **characterized in that** the structural part (1) is a roof part of a vehicle, in particular a hardtop roof of a convertible, or a component of the roof part.

## Revendications

1. Composant d'un véhicule, notamment partie de toit d'un véhicule, qui est fabriqué au moins partiellement en polycarbonate et sur lequel un renforcement de type armature est monté,
**caractérisé en ce que**
le renforcement de type armature est une structure hybride (2), qui contient une structure de raidissement (4) en plastique, laquelle est montée fixement à des fins d'immobilisation de la structure hybride (2) sur le composant (1) par soudure, notamment par soudure à vibration ou à friction.

2. Composant selon la revendication 1,
**caractérisé en ce que** la structure de raidissement (4) contient des nervures (5), dont les régions de bord (7) libres sont soudées au composant (2).

3. Composant selon la revendication 1 ou 2,
**caractérisé en ce que** la structure de raidissement (4), resp. les nervures (5) sont constituées de polycarbonate - ABS ou d'ABS.

4. Composant selon une des revendications 1 à 3,
**caractérisé en ce que** le composant (1) est fabriqué selon un procédé de moulage par injection 2K avec une couche (6) notamment en forme de bande, sur laquelle la structure hybride (2) est montée.

5. Composant selon une des revendications 1 à 4,
**caractérisé en ce que** le composant (1) présente une feuille de recouvrement (8) sur le côté faisant face à l'emplacement de montage de la structure hybride (2).

6. Composant selon une des revendications 1 à 5,
**caractérisé en ce que** le composant (1) est une partie de toit d'un véhicule, notamment un toit amovible d'un cabriolet, ou un composant de la partie de toit.
